Europäisches Patentamt

European Patent Office

Office européen des brevets

(11) Publication number: **0 395 341**
**A2**

## EUROPEAN PATENT APPLICATION

(21) Application number: 90304358.6

(51) Int. Cl.5: **F16N 13/10**

(22) Date of filing: 24.04.90

(30) Priority: 25.04.89 GB 8909360

(43) Date of publication of application:
31.10.90 Bulletin 90/44

(84) Designated Contracting States:
BE DE ES FR GB IT NL SE

(71) Applicant: **BRITISH AEROSPACE PUBLIC LIMITED COMPANY**
**11 Strand**
**London WC2N 5JT(GB)**

(72) Inventor: **Hillman, Michael J.F.**
**British Aerospace (Commercial Aircraft) Ltd.**
**Hatfield, Hertfordshire(GB)**

(54) Lubricating apparatus.

(57) Lubricating apparatus, in particular for mechanisms operating on a slow cycle stroke, comprises a lubricant reservoir 3 and a pump 8, both mounted for movement with the mechanism. On each cycle of the mechanism the pump is operated by depression of plunger 13 to supply to the mechanism a quantity of lubricant to replace that used in one operating cycle. The reservoir can have a large lubricant capacity to extend the lubrication maintenance period of the mechanism.

EP 0 395 341 A2

## LUBRICATING APPARATUS

This invention relates to a lubricating apparatus and in particular to an apparatus for automatically lubricating mechanisms operating on a slow cycle stroke. Such mechanisms include, for example, aircraft flaps, slats, landing gear, air brakes, spoilers, thrust reversers, doors and ramps but the invention is not limited thereto.

Conventionally such mechanisms have a certain lubricant capacity which progressively deteriorates or disperses with each cycle of operation. Since this capacity is relatively small the mechanism requires frequent relubrication in order to prevent inadequate lubrication or water/dirt ingress with consequent seizure or damage to the mechanism. Water ingress on aircraft involves an additional risk all year round, of freezing during normal operations, a further cause of jamming. The lubricant is therefore important in that it also acts to exclude water. This frequent relubrication is time consuming and further disadvantageous in that in practice it is difficult to control the amount, adequacy or method of relubrication.

According to the present invention there is provided lubricating apparatus for lubricating a mechanism operating on a slow cycle stroke comprising, a lubricant reservoir, pump means for withdrawing a predetermined quantity of lubricant from said reservoir and supplying said quantity of lubricant to said mechanism, and means for controlling the operation of said pump in response to operation of the mechanism.

By means of this arrangement the lubricant in the mechanism can be constantly replenished after operation of the mechanism by supplying from a reservoir an amount of lubricant corresponding to that dispersed or degraded during operation of the mechanism which also serves to exclude water/water vapour ingress. By providing a reservoir separate from the mechanism the reservoir can have a relatively large capacity compared to that of the mechanism itself; thus the reservoir will need refilling less frequently than prior mechanisms.

Accordingly the maintenance period, ie, the interval between lubrication services, is greatly extended without the need to change or redesign the mechanism itself.

Preferably the pump comprises a plunger member reciprocable within a cylinder having a lubricant inlet and a lubricant outlet, the plunger being spring-biassed into a position to allow the admission of a quantity of lubricant into the pump from the reservoir, and the pump being operated by depression of the plunger member within the cylinder against the spring-bias to expel said predetermined quantity of lubricant through the outlet;

the outlet being connected to the lubrication point of the mechanism.

Preferably the pump is controlled so that with every cycle of the mechanism the plunger is depressed to supply the mechanism with a quantity of lubricant and is then allowed to move by its spring-biassing into its lubricant admission position to admit a further quantity of lubricant into the pump in readiness for the next cycle of the mechanism.

One preferred way of achieving this control is to mount the pump and reservoir so that they move with the mechanism, depression of the plunger member being effected by the plunger member coming into contact with a fixed structural member or bracket, such as an end stop, provided towards the limit of movement of the mechanism. As an alternative to this direct depression of the plunger member, an associated lever may act on the plunger member.

In order to prevent damage (in case of over travel), or over pressure of lubricant if a blockage occurs, a compliant element may be provided to permit a small amount of continued movement of the plunger and/or the cylinder when the mechanism is at its limit of movement. This compliant element may be, for example, a relatively stiff spring between the end of the plunger and the structural member, or a flexural mounting of either the structural member or the lubricating apparatus itself.

The quantity of lubricant delivered with each operation of the pump is of course determined by the stroke of the plunger member and its dimensions, which must therefore be selected and/or set accordingly. Adjustment of the stroke may be made by means of an adjusting element provided at the end of the plunger member that is depressed or an adjustment on the stop attached to the structure.

Preferably the lubricant is fed to the pump from the reservoir under a slight pressure. To this end the reservoir may be provided with a spring-biassed piston. The reservoir may also be provided with means, for example associated with the piston, for indicating the amount of lubricant remaining in the reservoir.

Between the pump outlet and the mechanism there is preferably provided a non-return valve to prevent any unwanted back flow of lubricant from the mechanism to the pump. Another non-return valve is preferably provided between the pump inlet and reservoir to prevent unwanted back flow into the reservoir.

The lubricant may be either grease or oil, though in the latter case more rigorous sealing of the components may be necessary to retain oil and exclude water or water vapour.

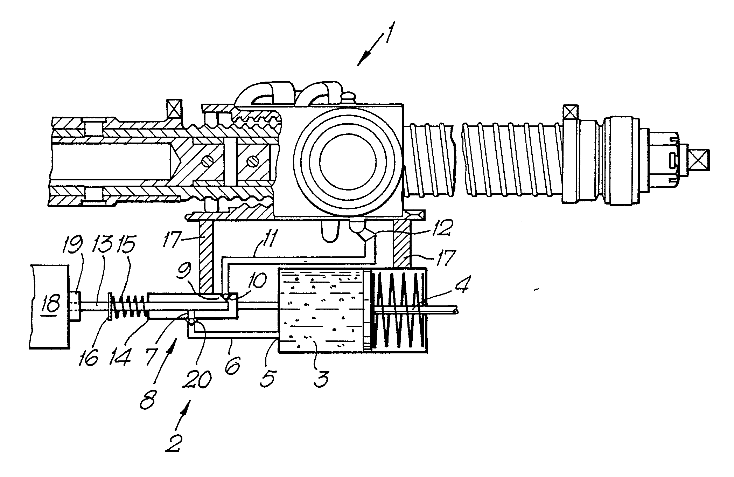

An embodiment of the invention will now be described by way of example and with reference to the accompanying drawing, which is a schematic part sectional view showing a lubricating apparatus fitted to a ball screw jack.

The figure shows generally a ball screw jack 1, such as may be used to operate an aircraft flap. Such a jack has a conventional grease capacity of about 50cc and experience indicates that the lubricant must be replaced after, no more than, approximately 250 flight cycles. Assuming two flap operations per flight this implies that 0.1cc of grease is 'used', or 'dispersed', with every flap operation. With a typical use of 3500 flights annually, relubrication of the jack must be carried out at least once a month, and perhaps even more frequently.

In the Figure there is shown a lubricating apparatus 2 that can replenish the jack with 0.1cc of grease with every operation of the jack. The apparatus includes a reservoir 3 for containing grease. The grease is maintained under a slight pressure by means of a spring-biassed piston 4. A reservoir outlet 5 leads via a line 6 and non-return valve 20 to the inlet 7 of a pump 8, the pump being, in effect, a miniature grease pump. An outlet 9 from the pump leads via a non-return valve 10, and line 11, to the grease point 12 of the jack.

The pump is operated by reciprocal movement of a plunger 13 within a cylinder 14. In the position shown in the Figure, the plunger is fully inserted within the cylinder at the end of its stroke. At other times the plunger 13 is biassed by a spring 15, acting between one end of the cylinder and a flange 16 on the plunger, into a position which allows the admission of a quantity of grease into the pump through inlet 7. Depression of the plunger against the spring-biassing to the position shown in the Figure expels this lubricant through the outlet 9, non-return valve 10 and line 11 to the jack.

The pump is controlled so that the plunger is depressed, in order to supply lubricant to the jack, once in every cycle of operation of the jack. Accordingly, the pump 8, reservoir 3 and connecting lines are mounted on the jack by means of a support bracket 17 and move with the jack. As the jack moves, to the left in the Figure, towards the limit of its travel, the plunger contacts on end stop 18. This end stop may by provided at any suitable location, for example, on the flap track. Continued movement of the jack to the end of its travel causes the cylinder to move relative to the plunger so that the plunger is depressed until the jack reaches the end of its travel when the position shown in the Figure is obtained. When the jack moves to the right in the Figure, the spring 15 urges the plunger out of the cylinder so as to admit lubricant into the pump for the cycle to begin again.

It may be preferable to provide a compliant element between the plunger and the end stop to prevent damage (in case of over travel) or over pressure of lubricant if a blockage occurs as the flap operating forces are very high and could break the cylinder, plunger, mountings etc, should a jam occur. This compliant element may comprise a stiff spring between the plunger and end stop, or a flexure in the mounting of either the end stop or the lubricating apparatus itself. Clearly, the stiffness of the spring/flexure must be enough to allow generation of sufficient pressure to force lubricant into the mechanism being lubricated.

The quantity of lubricant delivered by the pump on each depression of the plunger will clearly depend on the dimensions of the plunger and the plunger stroke, and accordingly these must be selected for the application in question. However to deliver 0.1cc of grease, typical values will be a plunger diameter (assuming circular cross-section) of 3.5 mm operating through a stroke of 10mm. Fine adjustment of the stroke may be made by an adjustment element 19 on the end of the plunger. Alternatively such adjustment means could be an integral part of the end stop.

The size of the reservoir may be selected at will and in general will only be limited by space and weight considerations. In the present embodiment a 700cc reservoir should provide sufficient lubricant for an annual 3500 flights. However, a plurality of such units may add too significantly to the weight of the aircraft, in which case a 350 cc reservoir, giving a service interval of six months, may be more appropriate. In different applications, however, larger or smaller reservoirs may be chosen.

Some form of indication device or scale is preferably provided associated with the piston 4 to give an indication of the grease remaining in the reservoir.

It will be appreciated that the lubricating apparatus described herein requires no significant changes to the mechanism itself. The apparatus may therefore be fitted retrospectively to a wide range of existing mechanisms, though it may be necessary to vary the precise configuration of the pump and reservoir depending on the space available. It will also be understood that while the apparatus has been described with reference to the lubrication of an aircraft flap system, many other applications are possible.

**Claims**

1 Lubricating apparatus for lubricating a mechanism operating on a slow cycle stroke comprising, a lubricant reservoir, pump means for withdrawing a predetermined quantity of lubricant from said reservoir and supplying said quantity of lubricant to said mechanism, and means for controlling the operation of said pump in response to operation of the mechanism.

2 Apparatus according to Claim 1 wherein said pump means comprises a plunger member reciprocable within a cylinder having a lubricant inlet and a lubricant outlet, the plunger being spring-biassed into a position to allow the admission of said quantity of lubricant into the pump from the reservoir, and the pump being operated by depression of the plunger member within the cylinder against the spring bias to expel said predetermined quantity of lubricant through the outlet; the outlet being connected to the lubrication point of the mechanism.

3 Apparatus according to Claim 2 wherein the pump is controlled so that with every cycle of the mechanism the plunger is depressed to supply the mechanism with a quantity of fluid and is then allowed to move by its spring-biassing into its lubricant admission position to admit a further quantity of lubricant into the pump in readiness for the next cycle of the mechanism.

4 Apparatus according to Claim 3 wherein the pump means and reservoir are mounted so that they move with the mechanism, depression of the plunger member being effected by the plunger member coming into contact with a fixed structural member or bracket provided towards the limit of movement of the mechanism.

5 Apparatus according to Claim 4 wherein a compliant element is provided to permit a small amount of continued movement of the plunger and/or cylinder when the mechanism is at its limit of movement.

6 Apparatus according to Claim 5 wherein said compliant element comprises a spring between said structural member or bracket and said plunger.

7 Apparatus according to Claim 5 wherein said compliant element comprises a flexure in the mounting of the apparatus on the mechanism to be lubricated, or a flexure in the mounting of the structural member or bracket contacted by said plunger.

8 Apparatus according to any of Claims 2 to 7 wherein one end of the plunger member is provided with an adjustment element by means of which the stroke of the plunger, and thus the amount of lubricant delivered in each operation of the pump means, may be varied.

9 Apparatus according to any preceding claim wherein the reservoir is provided with a spring-biassed piston whereby the lubricant is fed to the pump from the reservoir under pressure.

10 Apparatus according to any preceding claim wherein the reservoir is provided with means for indicating the amount of lubricant remaining in the reservoir.

11 Apparatus according to any preceding claim wherein a non-return valves are provided, one between the pump means and the mechanism to be lubricated, and another between the reservoir and the pump means.